(19) Europäisches Patentamt
European Patent Office
Office européen des brevets

(11) **EP 2 383 507 A1**

(12) **EUROPEAN PATENT APPLICATION**
published in accordance with Art. 153(4) EPC

(43) Date of publication:
**02.11.2011 Bulletin 2011/44**

(51) Int Cl.:
*F21S 2/00* (2006.01)     *F21Y 101/02* (2006.01)

(21) Application number: **09840408.0**

(22) Date of filing: **29.09.2009**

(86) International application number:
**PCT/JP2009/066940**

(87) International publication number:
**WO 2010/095305 (26.08.2010 Gazette 2010/34)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.02.2009 JP 2009039460**

(71) Applicant: **Sharp Kabushiki Kaisha Osaka-shi, Osaka 545-8522 (JP)**

(72) Inventor: **AJICHI, Yuhsaku Osaka 545-8522 (JP)**

(74) Representative: **Müller-Boré & Partner Patentanwälte Grafinger Straße 2 81671 München (DE)**

(54) **ILLUMINATING DEVICE, SURFACE LIGHT SOURCE, AND LIQUID CRYSTAL DISPLAY DEVICE**

(57)     A projecting part (4) is provided on at least one of a reflection sheet (3), which is provided so as to cover a surface facing an emission surface (1c) of a light guide (1), and a light guide section (1a) of the light guide (1) so that a space is secured at least partially between the light guide section (1a) and the reflection sheet (3). This makes it possible to provide an illumination device which (i) has a reduce thickness, (ii) achieves high light use efficiency, and (iii) can carry out a local dimming.

F I G.  1

EP 2 383 507 A1

## Description

Technical Field

The present invention relates to an illumination device or a surface illuminant device which is used as a backlight of a liquid crystal display device. Moreover, the present invention relates to a liquid crystal display device which includes the surface illuminant device.

Background Art

In these years, a liquid crystal display device has rapidly spread instead of a cathode-ray tube (CRT). Such a liquid crystal display device is widely used in devices such as a liquid crystal television, a monitor, and a mobile phone, by taking advantage of characteristics such as energy-saving, reduced thickness, and lightweight. The characteristics can be further utilized by, for example, improving an illumination device (so-called backlight) which is to be provided behind the liquid crystal display device.

The backlight, which is an illumination device, can be mainly classified into a side light type (which is also called edge light type) and a direct type. According to a side light type illumination device, a light guide plate is provided behind a liquid crystal display panel and a light source is provided on an edge part of the light guide plate. The light source emits light, and the light is reflected from the light guide plate so that the liquid crystal display panel is indirectly and uniformly irradiated with the light. This makes it possible to provide the illumination device having a reduced thickness, even though such an illumination device attains a low luminance. The side light type illumination device therefore is mainly applied to a small-to-medium-sized liquid crystal display for a device such as a mobile phone or a laptop computer.

According to a direct type illumination device, a plurality of light sources are provided behind a liquid crystal display panel so that the liquid crystal display panel is directly irradiated with light. This makes it possible to attain a high luminance even when the liquid crystal display panel has a large screen, and therefore the direct type illumination device is mainly applied to a large liquid crystal display having a size of 20 inches or more. However, a known direct type illumination device has a thickness of approximately 20 mm to 40 mm. Such a thickness interferes with further reduction in thickness of a display.

It is possible to further reduce a thickness of a large liquid crystal display by reducing a distance between the liquid crystal display panel and the light sources. In such a case, it is necessary to increase the number of the light sources in order to attain uniformity in luminance of the illumination device. On the other hand, such an increase of the number of the light sources leads to an increase in cost. It is therefore demanded to develop an illumination device which is small in thickness and has excellent luminous uniformity, without increasing the number of the light sources.

Conventionally, it has been tried to reduce a thickness of a large liquid crystal display with the used of an illumination device in which a plurality of light guide units are disposed.

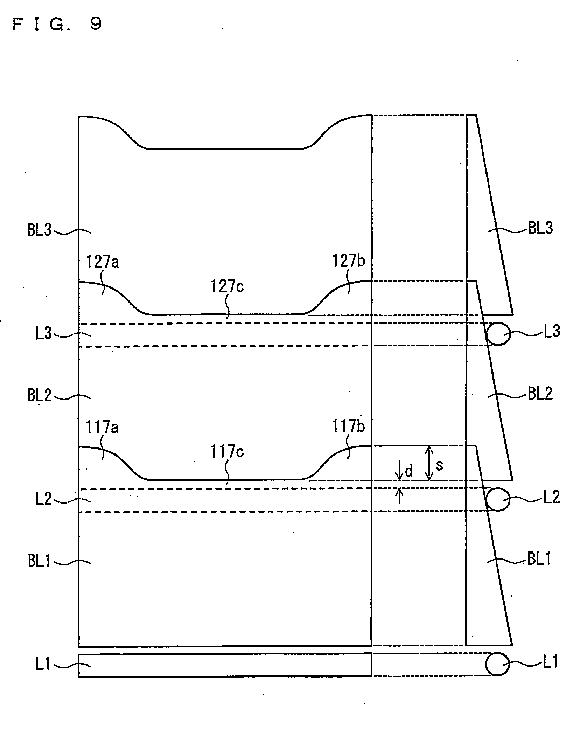

Patent Literature 1 discloses so-called tandem-arranged light guide blocks. According to the configuration disclosed in Patent Literature 1, a plurality of long and thin bar-shaped fluorescent lamps (L1, L2, and L3) are used as primary light sources and a plurality of light guide blocks (BL1, BL2, and BL3) are provided so that the plurality of light guide blocks (BL1, BL2, and BL3) partially overlap each other (see Fig. 9).

The light guide block BL1 receives a primary light ray emitted from the primary light source L1, and the other primary light sources (L2 and L3) are provided in respective recessed parts, which are formed in the vicinities of apical ends of the respective light guide blocks BL1 and BL2, so as to supply primary light rays to the respective light guide blocks BL2 and BL3.

Moreover, each one of any adjacent two light guide blocks has an overlapping section made up of (i) tongue-shaped overlapping sections 117a and 117b and a strip overlapping section 117c or (ii) tongue-shaped overlapping sections 127a and 127b and a strip overlapping section 127c (see Fig. 9).

According to the configuration disclosed in Patent Literature 1, the overlapping configuration allows electrodes to be provided on both edge parts of each of the primary light sources L2 and L3. This makes it possible to prevent lack of luminance, which easily occurs in the vicinities to the both edge parts.

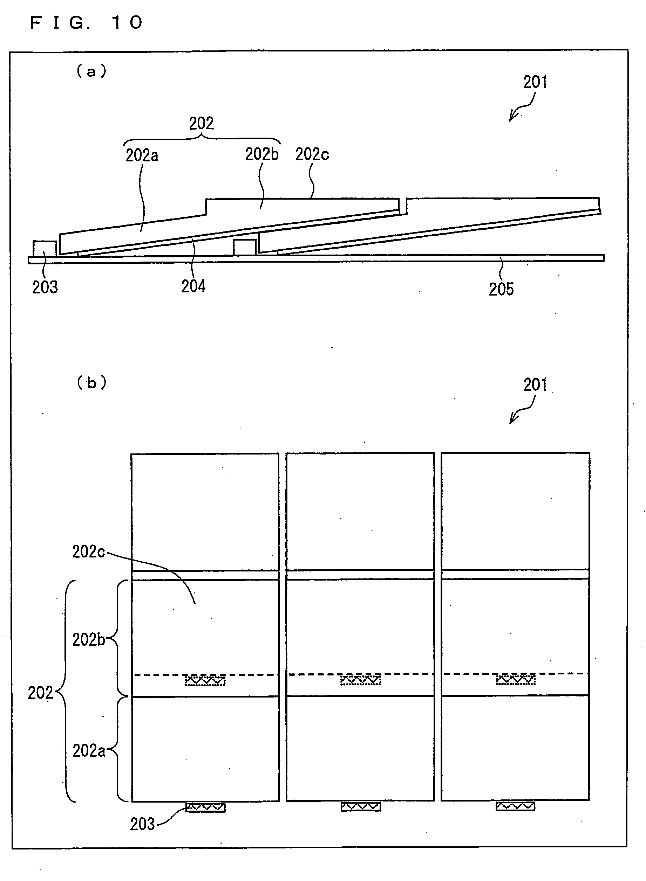

(a) of Fig. 10 is a lateral view illustrating a conventional tandem illumination device 201. (b) of Fig. 10 is a front view of the conventional tandem illumination device 201 which is viewed from an emission surface side.

According to the configuration, a plurality of LED light sources 203, which are point light sources, are provided as primary light sources. The illumination device 201 includes a plurality of light guides 202 each of which includes (i) a light emitting section 202b having an emission surface 202c and (ii) a light guide section 202a which guides light, emitted from a corresponding one of the plurality of LED light sources 203, toward the light emitting section 202b (see (a) and (b) of Fig. 10). Note that the plurality of light guides 202 are provided so that a light emitting section 202b of one of any adjacent two light guides 202 is provided above a light guide section 202a of the other of the any adjacent two light guides 202.

The light guide 202 is further provided with a reflection sheet 204 which reflects light, which leaks out of upper and lower surfaces of the light guide section 202a or out of a lower surface of the light emitting section 202b, so as to return the light toward the light guide 202. This makes it possible to improve light use efficiency.

The reflection sheet 204 is provided so that a part of the reflection sheet 204 is disposed between an upper surface of a light guide section 202a of one of any adjacent two light guides 202 and a lower surface of a light emitting section 202b of the other of the any adjacent two light guides 202 which light emitting section 202b is provided above the one of any adjacent two light guides 202 (see (a) of Fig. 10). Moreover, one end of the reflection sheet 204 is disposed between one end part on a light source 203 side of the light guide 202 and a substrate 205 on which the plurality of LED light sources 203 are to be provided.

The configuration makes it possible to reduce a thickness of an illumination device (so-called backlight) of a large liquid crystal display の illumination device.

Citation List

[Patent Literature]

Patent Literature 1

Japanese Patent Application Publication, Tokukaihei, No. 11-288611 (Publication Date: October 19, 1999)

Summary of Invention

Technical Problem

However, according to the technique disclosed in Patent Literature 1, the plurality of long and thin bar-shaped fluorescent lamps L1, L2, L3 are provided, as primary light sources, in the respective plurality of light guided blocks. This makes it drastically difficult to achieve a local dimming technique which attracts lots of attention, in view of energy-saving and improvement in contrast ratio, in a field of the illumination device (so-called backlight) of the large liquid crystal display.

According to the local dimming technique, a plurality of point light sources such as LED light sources are provided in an illumination device, and the plurality of point light sources are controlled independently so as to partially control luminance in a light emitting surface of the illumination device.

In a case where a point light source such as an LED light source is used as a primary light source, it is advantageously possible to achieve the local dimming technique easily. However, in order that uniform light is emitted from an entire emission surface of a light guide, it is necessary to provide, other than a light emitting section having the emission surface, a light guide section for guiding light, which is emitted by the LED light source, toward the light emitting section while sufficiently diffusing the light in the light guide.

The light guide section is required to guide the light emitted by the LED light source toward the light emitting section without loss. The elimination of the loss of light makes it possible to provide an illumination device having high light use efficiency.

In order to eliminate the loss of light, it is necessary that the light, which is emitted by the light source and then enters the light guide, is guided toward the light emitting section while being subjected to total reflection repeatedly in the light guide section.

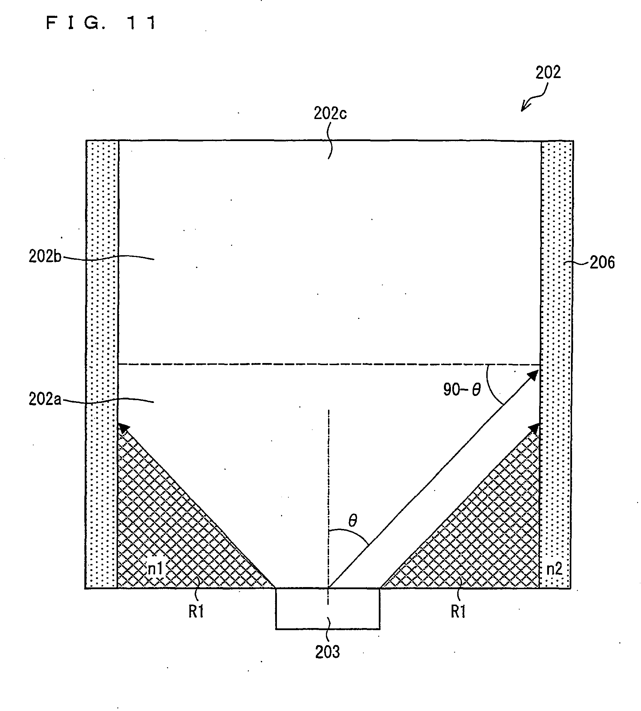

Fig. 11 is a plain view illustrating a schematic configuration of the light guide 202 provided in the conventional tandem illumination device 201.

Light enters the light guide 202, which is provided with the LED light source 203, from outside (an air layer) of the light guide 202, and the light travels while falling within a range of a critical angle θ in accordance with Snell's law (see Fig. 11). The critical angle θ is indicated as sinθ = 1/n1, where n1 is a refractive index of the light guide 202.

Accordingly, the light, which entered the light guide 202, is guided inside the light guide 202 while being subjected to total reflection on a boundary surface between the light guide 202 having a refractive index n1 and a substance layer 206 having a refractive index n2 under a condition of sin(90 - e) = n2/n1; in accordance with Snell's law. The equation leads to $1/(n1)^2 + (n2)^2/(n1)^2 = 1$, because sin(90 - θ) = cosθ and $(sinθ)^2 + (cosθ)^2 = 1$. When the equation is solved for n2, an equation $n2 = |\sqrt{(n-1)^2 - 1}|$ is obtained.

A total reflection condition therefore can be satisfied when the refractive index n2 of the substance layer 206 satisfies the following formula (1):

$$n2 < |\sqrt{(n1)^2 - 1}| \quad ...(1)$$

More specifically, in a case where the light guide 202 is made of acrylic resin for example, the total reflection condition can be satisfied when the substance layer 206 satisfies n2 < 1.10, because n1 = 1.49. Moreover, in a case where the light guide 202 is made of polycarbonate for example, the total reflection condition can be satisfied when the substance layer 206 satisfies n2 < 1.236, because n1 = 1.59.

The above description discusses the refractive index n2 of the substance layer 206 with which the light guide 202 satisfies the total reflection condition, with reference to the example in which the substance layers 206 are provided on both right and left surface sides of the light guide 202 (see Fig. 11). However, also in a case where the substance layers 206 are provided on both upper and lower surface sides of the light guide 202, the refractive index n2, with which the light guide 202 satisfies the total reflection condition, is identical to that in the case shown in Fig. 11, because light, which is emitted by the LED light source 203, spreads radially.

According to the conventional tandem illumination device 201 shown in (a) of Fig. 10, the reflection sheet 204 is provided so as to adhere to or be in contact with upper and lower surfaces of respective light guide sections 202a of any adjacent two light guides 202. That is, the substance layer 206 is the reflection sheet 204.

According to the configuration, a reflection sheet 204, which is made up of a plastic film such as PET film whose refractive index is substantially identical to that of the light guide 202, is provided between the upper and lower surfaces of the respective light guide sections 202a of the any adjacent two light guides 202.

The light guide 202 and the reflection sheet 204 are substantially identical to each other in view refractive index. Accordingly, light, which enters the light guide 202, is guided toward the light emitting section 202b while being reflected from the reflection sheets 204 without being subjected to total reflection by boundary surfaces between the respective upper and lower surfaces of the light guide section 202a and the respective reflection sheets 204.

In such a case, an existing reflection sheet has a reflectance which is not 100% but is approximately 96%. This causes a several percents of loss of light every time the light is reflected from the reflection sheet. There occurs a Problem, therefore, that light use efficiency is drastically decreased, in a case where light, which is emitted by a light source and then enters a light guide, is guided in a light guide section toward a light emitting section while being reflected from a reflection sheet repeatedly.

The present invention is accomplished in view of the problem, and its object is to provide an illumination device which (i) has a reduced thickness, (ii) achieves high light use efficiency, and (iii) can carry out a local dimming.

Moreover, a further object of the present invention is to provide a surface illuminant device which includes the illumination device so that the surface illuminant device (i) has a reduced thickness, (ii) achieves high light use efficiency, (iii) can carry out a local dimming, and (iv) has improved luminous uniformity.

Moreover, a yet further object of the present invention is to provide a liquid crystal display device which includes the surface illuminant device as a backlight so that the liquid crystal display device achieves (i) an excellent display quality and (ii) reduction in thickness thereof.

Solution to Problem

In order to attain the object, an illumination device of the present invention includes: (i) a point light source and (ii) a light guide which causes light emitted from the point light source to diffuse and have a surface emission, the light guide having (i) a light emitting section which has an emission surface and (ii) a light guide section which guides the light, emitted from the point light guide, toward the light emitting section, a light emitting section of one of any adjacent two light guides being provided above a light guide section of the other of the any adjacent two light guides, a reflection sheet being provided so as to cover a surface of the light guide, the surface facing the emission surface, and at least one of the reflection sheet and the light guide section having a projecting part so that a space is secured at least partially between the light guide section and the reflection sheet.

As already described, according to the conventional tandem illumination device, there is no difference in refractive index between (i) a light guide, which is made of, for example, transparent resin such as polycarbonate (PC) or polymethyl methacrylate (PMMA) and (ii) a reflection sheet made of a plastic film such as a PET film, which (i) and (ii) are provided so as to be in contact with each other. Accordingly, light, which enters the light guide, is guided toward the light emitting section while being reflected from the reflection sheets without being subjected to total reflection by the boundary surfaces between the respective upper and lower surfaces of the light guide section and the respective reflection sheets. This causes a problem that the light use efficiency is drastically decreased due to the loss of light generated by the reflection sheets.

On the other hand, according to the configuration of the present invention, the projecting part is provided on at least one of the reflection sheet and the light guide section of the light guide so that a space is secured at least partially between the light guide section and the reflection sheet.

The projecting part makes it possible to secure the space at least partially between the light guide section and the reflection sheet.

The space is to serve as an air layer whose refractive index is 1. According to the configuration, therefore, an air layer, whose refractive index is drastically smaller than that of the light guide, can be secured at least partially between the light guide section and the reflection sheet.

In an area of the light guide section in which area the space is secured (i.e., in an area which is in contact with the air layer), light, which enters the area at an angle with a normal line of the upper and lower surface of the light guide section which angle is larger than a total reflection critical angle, is to be entirely subjected to total reflection. This makes it possible to improve light use efficiency. Note that the total reflection critical angle is determined by a material of which the light guide is made.

According to the configuration, it is possible to provide an illumination device which (i) has a reduced thickness, (ii) achieves high light use efficiency, and (iii) can carry out a local dimming.

According to the illumination device of the present invention, it is preferable that the reflection sheet is a double-sided reflection sheet in at least an area which is secured between the light emitting section of the one of the any adjacent two light guides and the light guide section of the other of the any adjacent two light guides.

According to the configuration, in the area of the light guide section in which area the space is secured (i.e., in the area in contact with the air layer), the double-sided reflection sheet can reflect light which (i) has entered the upper surface of the light guide section at an angle, which is smaller than a critical angle of total reflection, with a normal line of the upper surface and (ii) therefore is not reflected by the upper surface and leaks out of the upper surface. The light thus reflected by the double-sided reflection sheet is returned toward the light guide section. This makes it possible to further improve light use efficiency. Note that the critical angle of total reflection is determined by a material for the light guide.

According to the illumination device of the present invention, it is preferable that the projecting part has a smaller contact area where the projecting part and the light guide section are touching than a contact area where the projecting part and the reflection sheet are touching.

According to the configuration, the projecting part, which has the shape above described, makes it possible to prevent light from leaking out of the light guide section, even in a case where the projecting part is made of a material which (i) has a property identical to that of the light guide or the reflection sheet and (ii) has a relatively high refractive index. This makes it possible to provide an illumination device which can achieve high light use efficiency.

According to the illumination device of the present invention, it is preferable that the projecting part is made of a light-transmitting material.

According to the configuration, the projecting part is made of a light-transmitting material, and it is therefore possible to suppress a loss of light which occurs in the projecting part due to absorption of light, etc. This makes it possible to provide an illumination device which achieves high light use efficiency.

According to the illumination device of the present invention, it is preferable that the projecting part is provided on the reflection sheet.

In a case where, for example, a fine projecting part is provided on the light guide section, fine concave and convex are provided on the surface of the light guide section. The fine concave-and-convex boundary is to cause a leakage of light, and this leads to a decrease in light use efficiency.

According to the configuration of the present invention, the projecting part is provided on the reflection sheet side. This makes it possible to prevent light from leaking out of the light guide section, and therefore an illumination device, which achieves high light use efficiency, can be provided.

According to the illumination device of the present invention, it is preferable that the projecting part is provided so as to be located in an area, which is not irradiated with light emitted by the point light source, in the light guide section.

The description "the projecting part is provided so as to be located in an area, which is not irradiated with light emitted by the point light source, in the light guide section" means that, when the plurality of light guides are provided tandem, each of the projecting parts is disposed in an area of a corresponding one of the light guide section which area is not irradiated with light emitted by the point light source, regardless of whether the each of the projecting parts is provided on the light guide section side or on the reflection sheet side.

According to the configuration, the projecting part is provided in the area of the light guide section which area is not irradiated with light emitted by the point light source, regardless of whether the projecting part is provided on the light guide section side or on the reflection sheet side. This makes it possible to prevent light from leaking, due to an effect of the projecting part, out of the light guide section. It is therefore possible to provide an illumination device which achieves high light use efficiency.

According to the illumination device of the present invention, it is preferable that the reflection sheet is combined with the light guide via an adhesive member.

According to the configuration, the reflection sheet is combined with the light guide via the adhesive member. This makes it possible to (i) prevent a positional displacement of the reflection sheet and (ii) improve workability of combining with the light guide.

In order to attain the object, a surface illuminant device includes the illumination device and an optical member which is provided on a light emitting surface of the illumination device.

For example, a diffusing plate which has a thickness of approximately 2 mm to 3 mm and is provided so as to be away, by several millimeters, from the illumination device can be employed as the optical member. Note, however, that the thickness of the optical member and the distance by which the optical member is away from the illumination device are not limited to those described above.

Moreover, it is possible to provide, on the upper surface of the diffusing plate, for example, a multi-functional optical sheet such as a diffusing sheet having a thickness of approximately several hundreds micrometers, a prism sheet, or a polarizing reflection sheet so as to secure luminous uniformity which is sufficient for the surface illuminant device to carry out its function. The thickness and the configuration are merely illustrative, and the present invention is therefore not limited to these.

According to the configuration, it is possible to provide a surface illuminant device which (i) has a reduced thickness, (ii) achieves high light use efficiency, (iii) can carry out a local dimming, and (iv) has improved luminous uniformity.

In order to attain the object, a liquid crystal display device of the present invention includes the surface illuminant device as a backlight.

According to the configuration, the surface illuminant device is provided, as a backlight, in the liquid crystal display device. This makes it possible to provide a liquid crystal display device which achieves (i) an excellent display quality and (ii) reduction in thickness thereof.

Advantageous Effects of Invention

The illumination device of the present invention includes, as described above, (i) the reflection sheet which is provided so as to cover a surface of the light guide, the surface facing the emission surface, and (ii) at least one of the reflection sheet and the light guide section which has a projecting part so that a space is secured at least partially between the light guide section and the reflection sheet.

According to the surface illuminant device of the present invention, the optical member is provided on the light emitting surface of the illumination device, as described above.

The liquid crystal display device of the present invention includes, as a backlight, the surface illuminant device, as described above.

This makes it possible to bring about effects of achieving (i) reduction in thickness, (ii) high light use efficiency, and (iii) a local dimming.

Moreover, it is possible to provide the surface illuminant device which (i) has a reduced thickness, (ii) achieves high light use efficiency, (iii) can carry out a local dimming, and (iv) has improved luminous uniformity.

Moreover, it is possible to provide the liquid crystal display device which includes, as a backlight, the surface illuminant device so as to achieve (i) an excellent display quality and (ii) reduction in thickness thereof.

Brief Description of Drawings

Fig. 1

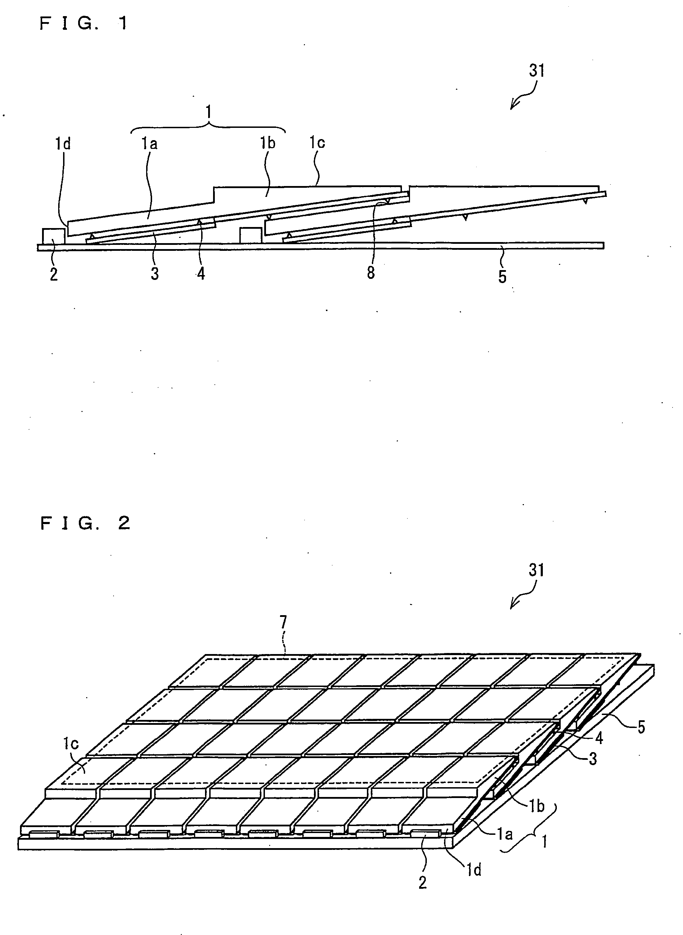

Fig. 1 is a lateral view of an illumination device which is provided in a liquid crystal display device in accordance with an embodiment of the present invention.
Fig. 2
Fig. 2 is a perspective view of the illumination device shown in Fig. 1.
Fig. 3

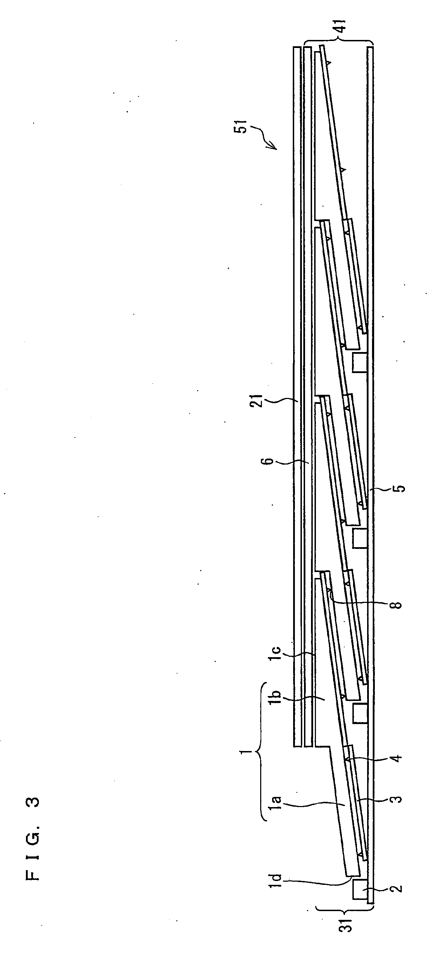

Fig. 3 is a lateral view illustrating a schematic configuration of a liquid crystal display device in accordance with an embodiment of the present invention.
Fig. 4

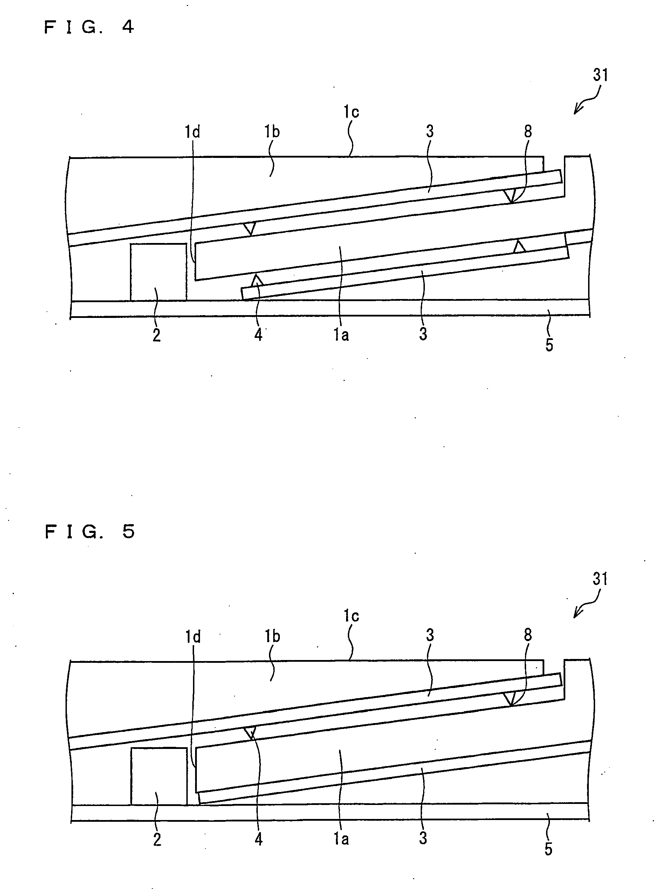

Fig. 4 is a partially magnified view illustrating the illumination device shown in Fig. 1.
Fig. 5
Fig. 5 is a view illustrating another example of providing a projecting part on a reflection sheet in an illumination device included in a liquid crystal display device in accordance with an embodiment of the present invention.
Fig. 6

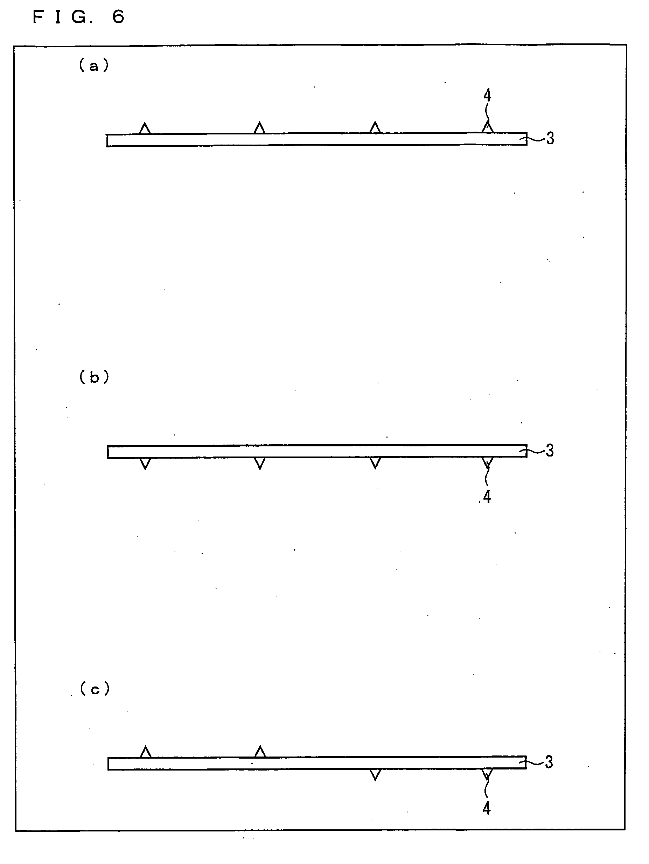

Fig. 6 is a view illustrating an example of a reflection sheet having a projecting part in an illumination device included in a liquid crystal display device in accordance with an embodiment of the present invention, where (a) illustrates an example of a reflection sheet provided on a lower surface of a light guide section, (b) illustrates an example of a reflection sheet provided on a lower surface of a light emitting section, and (c) illustrates an example of a reflection sheet which is provided on a lower surface of a light guide.
Fig. 7

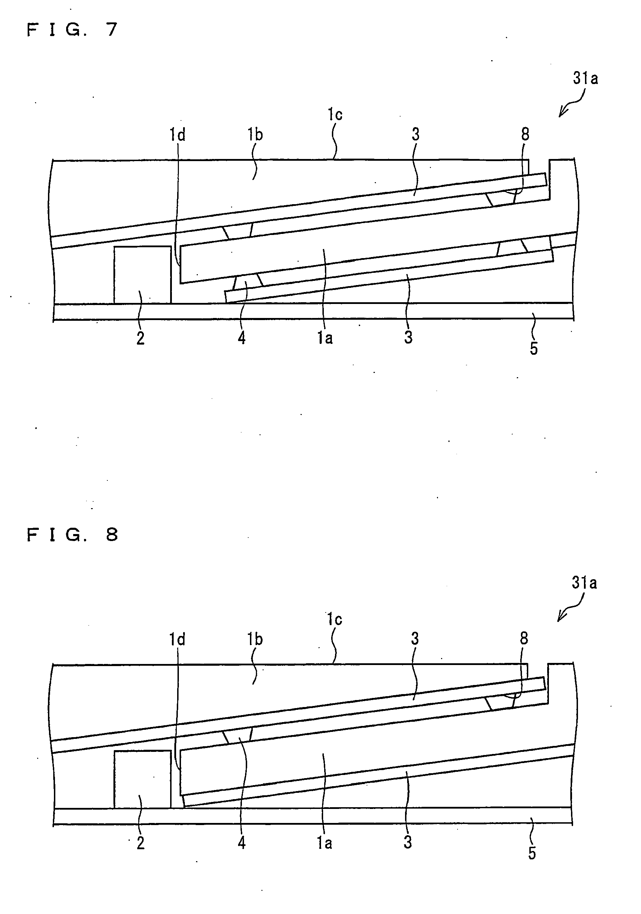

Fig. 7 is a view illustrating an example of a case where a projecting part is provided on a light guide section of a light guide in an illumination device in accordance with another embodiment of the present invention.
Fig. 8
Fig. 8 is a view illustrating another example of a case where a projecting part is provided on the light guide section of the light guide in the illumination device in accordance with the another embodiment of the present invention.
Fig. 9
Fig. 9 is a view illustrating conventional tandem arranged light guide blocks.
Fig. 10
Fig. 10 is a view illustrating a schematic configuration of a conventional tandem illumination device, where (a) is a view from a lateral side and (b) is a view from an emission surface side.
Fig. 11
Fig. 11 is a plain view illustrating a schematic configuration of a light guide provided in a conventional tandem illumination device.

Description of Embodiments

The following describes details of embodiments of the present invention with reference to drawings. Note, however, that the description of dimensions, materials, shapes, their relative locations etc. in the embodiments merely exemplify an embodiment of the present invention, and therefore should not be interpreted as limiting the scope of the invention only to them.

An illumination device of an embodiment of the present invention (i) has a reduced thickness, (ii) achieves light use efficiency, and (iii) carries out a local dimming.

Moreover, a surface illuminant device of an embodiment of the present invention (i) has a reduced thickness, (ii) achieves light use efficiency, (iii) carries out a local dimming, and (iv) has improved luminous uniformity.

Moreover, a liquid crystal display device of an embodiment in accordance with the present invention includes the surface illuminant device as a backlight, so as to achieve (i) an excellent display quality and (ii) a reduction in thickness.

The following describes details of embodiments which exemplify the present invention with reference to drawings. Note, however, that the description of dimensions, materials, shapes, their relative locations etc. in the embodiments is not intended to limit the scope of the invention only to them but is intended to merely exemplify the present invention, unless otherwise specifically described.

The following describes an embodiment with reference to Figs. 1 through 6.

[Embodiment 1]

Fig. 3 is a lateral view schematically illustrating a configuration of a liquid crystal display device 51 of an embodiment in accordance with the present invention.

The liquid crystal display device 51 includes (i) a liquid crystal display panel 21 and (ii) a surface illuminant device 41, including an illumination device 31, which serves as a backlight for emitting light toward the liquid crystal display panel 21. The illumination device 31 includes a plurality of combinations each of which includes a light guide 1 and a point light source 2.

The light guide 1 has a light guide section 1a and a light emitting section 1b. The light guide section 1a causes light emitted from the point light source 2 to be guided toward the light emitting section 1b. The light emitting section 1b causes a surface emission from an emission surface 1c of the light emitting section 1b.

Fig. 2 is a perspective view illustrating the illumination device 31.

According to the illumination device 31, the light guides 1 are provided so as to be adjacent to each other. The light guides 1 are provided so that a light emitting section 1b of one of any adjacent two light guides 1 is provided above a light guide section 1a of the other of the any adjacent two light guides 1. This allows the emission surfaces 1c to provide a single large uniplanar light emitting surface 7 (see Fig. 2).

Note that a reflection sheet 3 (later described in detail) is provided on a back surface (i.e., an surface opposite to the emission surface 1c) of the light guide 1 (see Fig. 3).

Note that the reflection sheet 3 has a projecting part 4 so as to secure a space between the light guide section 1 a and the reflection sheet 3.

The surface illuminant device 41 (backlight) includes (i) a substrate 5 which supports the illumination device 31 and (ii) an optical member 6 which is provided behind (i.e., on an opposite side to a display surface) the liquid crystal display panel 21.

That is, a back surface of the optical member 6 is to be irradiated with light which is surface-emitted from the emission surfaces 1c.

<Projecting part>

The following describes, with reference to Fig. 1 and Figs. 4 through 6, the projecting part 4 of the reflection sheet 3 in the illumination device 31.

Fig. 1 is a lateral view illustrating the illumination device 31 which is provided in the liquid crystal display device 51 of an embodiment in accordance with the present invention.

According to the illumination device 31, the reflection sheet 3 has the projecting part 4 so as to at least partially secure a space between the light guide section 1a and the reflection sheet 3 (see Fig. 1).

The projecting part 4 allows a space to be secured at least partially between the light guide section 1a and the reflection sheet 3.

The space is to serve as an air layer whose refractive index is 1. According to the configuration, therefore, an air layer, whose refractive index is drastically smaller than that of the light guide 1, can be secured at least partially between the light guide section 1a and the reflection sheet 3.

In an area of the light guide section 1a in which area the space is secured (i.e., in an area which is in contact with the air layer), light, which enters the area at an angle with a normal line of the upper and lower surface of the light guide section 1a which angle is larger than a total reflection critical angle, is to be entirely subjected to total reflection. This makes it possible to improve light use efficiency. Note that the total reflection critical angle is determined by a material of which the light guide 1 is made.

According to the configuration, it is possible to provide the illumination device 31 which (i) has a reduced thickness, (ii) achieves high light use efficiency, and (iii) can carry out a local dimming.

Note that the present embodiment is configured so that the reflection sheet 3 has the projecting part 4 so as to provide an illumination device which achieves high light use efficiency. The present embodiment is, however, not limited to this, and can be therefore configured so that at least one of the reflection sheet 3 and the light guide section 1 a of the light guide 1 has a projecting part 4.

Fig. 4 is a partially magnified view illustrating the illumination device 31 shown in Fig. 1.

According to the illumination device 31, it is preferable that the projecting part 4 has a contact area where the projecting part 4 and the light guide section 1a are touching is smaller than a contact area where the projecting part 4 and the reflection sheet 3 are touching (see Fig. 4).

In a case where a projecting part 4 is integrated with a reflection sheet 3, the "contact area where the projecting part 4 and the reflection sheet 3 are touching" stands for an area of a region, in which the projecting part 4 is formed, on a surface of the reflection sheet 3.

The projecting part 4 has a part which (i) is in contact with the light guide section 1a of the light guide 1 and (ii) has a shape of, for example, fine concave and convex, a protrusion, or a column.

Note that, in order to provide the illumination device which achieves high light use efficiency, it is preferable to minimize a size of and the number of the projecting part(s) 4 which allows a space to be secured at least partially between the light guide section 1a and the reflection sheet 3.

The projecting part 4 of the present embodiment has a conical shape so as to have a small contact area where the projecting part 4 and the light guide section 1a are touching (see Fig. 4). However, the present embodiment is not limited to this. The projecting part 4 can therefore have any shape, provided that the contact area where the projecting part 4 and the light guide section 1a are touching is smaller.

According to the present embodiment, the projecting part 4 is provided on the reflection sheet 3 by integral press molding. However, the present embodiment is not limited to this. For example, the projecting part 4 can be formed by a method such as injection molding, molding with the use of a die, or embossing, concurrently with the sheet 3 being formed. That is, any known method can be used as appropriate, provided that the projecting part 4 can be provided on the reflection sheet 3.

According to the illumination device 31, it is preferable that the projecting part 4 is provided in an area of the light guide section 1a which area is not irradiated with light emitted by the point light source 2.

Since the point light source 203 has directivity, the light guide section 202a has an area R1 which is not irradiated with light and therefore darkens and shadows (see Fig. 11). Specifically, the areas R1, which correspond to respective angles that are wider than the critical angle θ at which the light enters the light guide section 202a via respective right and left ends of the light guide section 202a, are not irradiated with the light emitted by the light source 203.

According to the present embodiment, the light guide section 1a also has an area which corresponds to the area R1 shown in Fig. 11 and which is not irradiated with light and therefore darkens and shadows, due to directivity of the point light source 2.

According to the configuration, the projecting part 4 is provided in the area of the light guide section 1 a which area is not irradiated with light emitted by the point light source 2, regardless of whether the projecting part 4 is provided on the light guide section 1a side or on the reflection sheet 3 side. This makes it possible to prevent light from leaking, due to an effect of the projecting part 4, out of the light guide section 1a. It is therefore possible to provide an illumination device 31 which achieves high light use efficiency.

Moreover, according to the illumination device 31, it is preferable that the projecting part 4 is made of a light-transmitting material.

The projecting part 4 can be made of a light-transmitting material so as to prevent incident light from blocking off. This makes it possible to reduce an amount of light which is blocked off by the projecting part 4.

A transparent resin, such as acrylic resin or polycarbonate, can be employed as a material for the light-transmitting material. However, the present embodiment is not limited to this.

According to the configuration, the projecting part 4 is made of a light-transmitting material, and it is therefore possible to suppress a loss of light which occurs in the projecting part 4 due to absorption of the light, etc. This makes it possible to provide the illumination device 31 which achieves high light use efficiency.

According to the illumination device 31, it is preferable that the reflection sheet 3 is combined with the light guide 1 via an adhesive member 8 (see Fig. 4).

According to the configuration, the reflection sheet 3 is combined with the light guide 1 via the adhesive member 8. This makes it possible to (i) prevent a positional displacement of the reflection sheet 3 and (ii) improve workability of combining with the light guide 1.

An adhesive member such as a double-sided adhesive tape or glue can be used as the adhesive member 8. It is preferable that the adhesive member 8 is made of a transparent material, in order to provide the illumination device 31 which achieves high light use efficiency.

Fig. 5 illustrates another example of how to provide the projecting part 4 on the reflection sheet 3.

According to the present embodiment, the reflection sheets 3, on each of which the projecting part 4 is provided, are provided on both the upper and lower surfaces of the light guide section 1a, in order to provide the illumination device 31 which achieves high light use efficiency (see Fig. 4). Alternatively, the reflection sheet 3, on which the projecting part 4 is provided, can be provided only on the upper surface of the light guide section 1a (see Fig. 5). Alternatively, the reflection sheet 3, on which the projecting part 4 is provided, can be provided only on the lower surface of the light guide section 1a (not illustrated).

Each of the reflection sheets 3 is provided so as to cover a surface opposite to an emission surface 1c of a corresponding one of the light guides 1 (see Fig. 1). Moreover, each of the reflection sheets 3 serves to improve light use efficiency of each of the light guides 1, by reflecting light which leaks out of the surface opposite to an emission surface 1c of a corresponding one of the light guides 1 so as to return the light toward the each of the light guides 1. More specifically, in each of the light guides 1, the reflection sheet 3 reflects light which (i) has entered the surface opposite to the emission surface 1c at an angle, which is a critical angle of total reflection or smaller, with a normal line of the surface opposite to the emission surface 1c, which critical angle is determined by a material for the light guide 1, and (ii) leaks out of the light guide 1. The light thus reflected from the reflection sheet 3 is returned toward the light guide 1.

It is preferable that the reflection sheet 3 of the

**EP 2 383 507 A1**

illumination device 31 is a double-sided reflection sheet in at least an area which is secured between the light emitting section 1b of the one of the any adjacent two light guides 1 and the light guide section 1a, which is provided below the light emitting section 1b, of the other of the any adjacent two light guides 1.

According to the configuration, in the area of the light guide section 1a in which area the space is secured (i.e., in the area in contact with the air layer), the double-sided reflection sheet can reflect light which (i) has entered the upper surface of the light guide section 1a at an angle, which is smaller than a critical angle of total reflection, with a normal line of the upper surface and (ii) therefore is not reflected by the upper surface and leaks out of the upper surface. The light thus reflected by the double-sided reflection sheet is returned toward the light guide section 1a. This makes it possible to further improve light use efficiency.

It is possible to use, as the reflection sheet 3, (i) a specular reflection sheet onto which a material such as silver or aluminum which has a high reflectance is evaporated, (ii) a white reflection sheet having diffuse reflection property, or (iii) a reflection sheet which is obtained by combining a specular reflection sheet and a white reflection sheet.

It is preferable to use a PET white reflection sheet, which has excellent heat stability, out of the reflection sheets above exemplified. The PET white reflection sheet can be mainly classified, by its configuration, into types such as (i) a sheet prepared by adding white inorganic particles to PET, (ii) a sheet prepared by adding a resin (such as olefin resin), which is immiscible in PET, to PET, and (iii) a sheet prepared by foaming a PET sheet with which carbon-dioxide gas is impregnated. Note that any type of PET white reflection sheet can be used as the reflection sheet 3.

In a case where the specular reflection sheet is used, it is possible to easily provide a diffuse reflection layer in a desired area on at least one of sides of the specular reflection sheet by (i) providing concave and convex on or (ii) applying a white material on the at least one of sides of the specular reflection sheet. A diffuse reflection caused by fine concave and convex can suppress, more effectively, an occurrence of unevenness in luminance in the emission surface 1c.

The concave and convex can be provided on the specular reflection sheet by, for example, a method such as injection molding, molding with the use of a die, or embossing, concurrently with the specular reflection sheet being formed. Alternatively, a surface of the specular reflection sheet can be subjected to a process such as a prism process, a dot process, or surface roughening with the use of a laser beam, etc.

In a case where a double-sided reflection sheet is employed as the reflection sheet 3, it is possible to (i) use the double-sided reflection sheet as it is or (ii) use two (2) one-side reflection sheets which are combined with each other by use of an agent such as a commercially available adhesive agent (adhesive paste).

According to the present embodiment, the PET white reflection sheet and the double-sided reflection sheet are used as the reflection sheet 3.

Fig. 6 illustrates examples of reflection sheets 3 each of which has projecting parts 4.

(a) of Fig. 6 illustrates a reflection sheet which is provided on the lower surface of the light guide section 1a.
(b) of Fig. 6 illustrates a reflection sheet which is provided on the lower surface of the light emitting section 1b.
(c) of Fig. 6 illustrates a reflection sheet which is provided on the lower surface of the light guide 1.

In a case where the reflection sheet shown in (c) of Fig. 6 is used, only a single reflection sheet needs to be provided in each of the light guides 1. This makes it possible to improve workability. On the other hand, in a case where the reflection sheet shown in (a) or (b) of Fig. 6 is used, it is necessary to provide two reflection sheets in each of the light guides 1.

The following describes further details of a configuration of the liquid crystal display device 51, with reference to Fig. 3.

The following describes details of the substrate 5 on which the point light source 2 is to be mounted.

The substrate 5 is a substrate on which the point light sources 2 are provided. It is preferable that the substrate 5 is white in order to improve luminance. Note that a driver (not illustrated), that controls LEDs which constitute the point light sources 2 to turn on or off, is provided on a side of a back surface (which is opposite to a surface on which the point light sources 2 are provided) of the substrate 5. That is, the driver is provided on the substrate 5 on which the LEDs are provided. This makes it possible to reduce the number of substrates and to reduce components such as connectors for connecting one substrate to another. Accordingly, it is possible to reduce cost of the device. Moreover, the number of the substrates is small, and it is therefore possible to reduce a thickness of the liquid crystal display device 51.

The optical member 6 is made up of at least a diffusing plate which diffuses received light to improve uniformity of luminance. Preferably, the optical member 6 is configured by combining a multi-functional optical member with a diffusing plate. The multi-functional optical member has a plurality of optical functions selected from various optical functions including diffusion, refraction, converging of light, and polarization of light.

For example, a diffusing plate which has a thickness of approximately 2 mm to 3 mm and is provided so as to be away, by several millimeters, from the illumination device 31 can be employed as the optical member 6. Note, however, that the thickness of the diffusing plate and the distance by which the diffusing plate is away from the illumination device 31 are not limited to those described above.

The diffusing plate (i) is provided so as to face the light emitting surface and cover an entire light emitting surface which is made up of the emission surfaces 1c which are juxtapose to each other and (ii) is provided away, by a predetermined distance, from the light emitting surface. The diffusing plate diffuses light which is emitted from the emission surface.

It is possible to further provide, on the upper surface of the diffusing plate, for example, a multi-functional optical member such as a diffusing sheet having a thickness of approximately several hundreds micrometers, a prism sheet, or a polarizing reflection sheet so that the surface illuminant device 41 can secure further excellent luminance and luminous uniformity. The thickness and the configuration are merely illustrative, and the present embodiment is therefore not limited to these.

The multi-functional optical member is made up of a plurality of stacked sheets. The multi-functional optical member uniformizes and converges the light emitted from the emission surfaces 1c of the light guides 1 so that the liquid crystal display panel 21 is irradiated with the light thus uniformized and converged.

That is, the multi-functional optical member can be a sheet such as (i) a diffusing sheet which scatters light while converging, (ii) a lens sheet which improves luminance of light in frontward direction (a direction pointing the liquid crystal display panel 21) by converging the light, and/or (iii) a polarizing reflection sheet which improves luminance of the liquid crystal display device 51 by reflecting one polarization component of light while causing the other polarization component to transmit. It is preferable that the sheets (i) through (iii) are used in combination as appropriate, in accordance with a cost and properties of the liquid crystal display device 51.

The optical member 6 as above described is provided on the light emitting surface of the illumination device 31 in the surface illuminant device 41 which is provided in the liquid crystal display device 51 of the present embodiment.

According to the configuration, it is possible to provide the surface illuminant device 41 which (i) has a reduced thickness, (ii) achieves high light use efficiency, (iii) can carry out a local dimming, and (iv) has improved luminous uniformity.

The liquid crystal display device 51 of the present embodiment includes, as a backlight, the surface illuminant device 41.

According to the configuration, the surface illuminant device 41 is provided, as a backlight, in the liquid crystal display device 51. This makes it possible to provide the liquid crystal display device 51 which achieves (i) an excellent display quality and (ii) a reduction in thickness thereof.

It is necessary for the light guide 1 to suppress and minimize a loss of light in the light guide section 1a so that the light, that has entered the entrance surface 1d which faces the point light source 2, is efficiently emitted via the emission surface 1c (see Fig. 3).

The light which has entered the entrance surface 1d is guided in the light guide section 1a while satisfying a total reflection condition, because an upper face and a lower face of the light guide section 1a are provided so as to be substantially in parallel with each other. It is therefore possible to maintain amount of light.

Moreover, the emission surface 1c is provided so as to be substantially in parallel with the optical member 6 (see Fig. 3). It is therefore possible to easily secure a uniform distance between the optical member 6 and the respective emission surfaces 1c, in a case of designing a surface illuminant device 41 which carries out uniform surface emission by combining the optical member 6 with the illumination device 31 of the present embodiment. This brings about an advantage of simplifying an optical design for uniformizing surface emission.

Furthermore, any adjacent two of the light guides 1 are provided so as to overlap each other at a slant with respect to the optical member 6 toward which the light is directed. Accordingly, in each of the light guides 1, the emission surface 1c is not in parallel with a surface opposite to the emission surface 1c. In other words, the light emitting section 1b has a shape which becomes thinner as a distance from the point light source 2 increases, i.e., the emission surface 1c comes closer to the surface opposite to the emission surface 1c as the distance from the point light source 2 increases.

According to the configuration, the light which has been guided in the light guide 1 gradually fails to meet the total reflection condition as a distance from the point light source 2 increases, and the light is ultimately emitted from the emission surface 1c.

It is preferable that a surface (emission surface 1 c) or a back surface of the light emitting section 1b is subjected to a process (fine concavity and convexity process) or a treatment in order to cause guided light to be emitted. Such a process or treatment can be, for example, a prism process, texturing, or a printing treatment. However, the present embodiment is not limited to those described above, and therefore a known method can be used as appropriate.

The light guide 1 can be made of a transparent resin such as polycarbonate (PC) or polymethyl methacrylate (PMMA). However, the present embodiment is not limited to this, and therefore the light guide 1 can be made of a material which is generally used as that of a light guide. The light guide 1 can be formed by a method such as injection molding, extrusion molding, heat-press molding, or cutting. However, the present embodiment is not limited to these methods, and therefore any processing method can be used, provided that it allows the light guide 1 to achieve similar property.

Each of the point light sources 2 is provided along an edge part of a light guide section 1a of a corresponding one of the light guides 1 (see Fig. 2). According to the present embodiment, a light emitting diode (LED) is used as each of the point light sources 2.

Alternatively, a combination of a plurality of kinds of light emitting diodes, each of which emits light in a different color, can be used as the point light source 2. Specifically, it is possible to use an LED group of at least three light emitting diodes of red (R), green (G), and blue (B). In a case where a combination of the light emitting diodes of the three colors is used as the point light source 2, white light can be emitted from the emission surface 1c.

Note that such a combination of colors of the light emitting diodes can be determined as appropriate based on properties such as (i) color properties of LEDs having respective colors and (ii) a desired color property which the surface illuminant device 41 is desired to have in accordance with an intended use of the liquid crystal display device 51. Note that it is possible to use a side-emitting LED in which LED chips of respective different colors are molded in a single package. This makes it possible to obtain an illumination device 31 having a wide color reproduction range.

According to the present embodiment, a transmissive liquid crystal display panel which carries out a display by transmitting light which is emitted by the surface illuminant device 41 (backlight) is used as the liquid crystal display panel 21.

Note that the configuration of the liquid crystal display panel 21 is not limited to a specific one, and therefore a known liquid crystal display panel can be used as appropriate. Even though not illustrated, the Liquid crystal display panel 21 includes, for example, (i) an active matrix substrate on which a plurality of TFTs (thin film transistors) are provided, (ii) a color filter substrate which faces the active matrix substrate, and (iii) a liquid crystal layer which is sealed between the substrates with a sealing material.

Moreover, in order to carry out a local dimming driving in the illumination device 31 or in the surface illuminant device 41, the plurality of point light sources 2 are independently adjusted (independently driven) in view of its light amount so that amount of light, which is emitted from each of the emission surfaces 1c, is independently adjusted. This makes it possible to adjust illuminating luminance for each light emitting surface having a predetermined size, and therefore a local dimming driving can be carried out.

Note that a method for producing a liquid crystal display device which has a function of the local dimming driving can be carried out in conformity with a conventionally known method for producing a liquid crystal display device which can carry out a local dimming driving. Therefore, description of such a method is omitted here.

[Embodiment 2]

The following describes Embodiment 2 of the present invention with reference to Figs. 7 and 8. The present embodiment is a modification of the Embodiment 1 in which the projecting part 4 is provided on the light guide section 1a of the light guide 1.

Note that configurations which are not described in this embodiment are similar to those of Embodiment 1. Moreover, for convenience, the same reference numerals are given to members which have functions identical to those shown in the drawings of Embodiment 1, and descriptions of such members are omitted here.

Fig. 7 is a view illustrating an example in which projecting parts 4 are provided on a light guide section 1a of a light guide 1 in an illumination device 31 a in accordance with another embodiment of the present invention.

Fig. 8 is a view illustrating another example in which projecting parts 4 are provided on a light guide section 1a of a light guide 1 in an illumination device 31 a in accordance with another embodiment of the present invention.

According to the present embodiment, the projecting parts 4 are provided on both upper and lower surfaces of the light guide section 1a so that a space is secured at least partially between the light guide section 1a and the respective reflection sheets 3, in order to provide the illumination device 31a which achieves high light use efficiency (see Fig. 7). Alternatively, the projecting part 4 can be provided only on the upper surface of the light guide section 1a (see Fig. 8). Alternatively, the projecting part 4 can be provided only on the lower surface of the light guide section 1 a (not illustrated).

Note that it is possible to provide the projecting part 4 on the light guide section 1 a of the light guide 1 by the use of a method such as (i) an integral molding such as heat molding or injection molding, (ii) a forming by trimming, or (iii) additionally providing a shape to the projecting part 4 with the use of a material such as ultraviolet curing resin. However, the present embodiment is not limited to those methods, and therefore a known method can be used as appropriate.

Note that, according to the present embodiment, the projecting part 4 has a column-like shape with which a contact area where the projecting part 4 and the light guide section 1a are touching is smaller than a contact area where the projecting part 4 and the reflection sheet 3 are touching. However, the present embodiment is not limited to this.

It should be noted that, in a case where a density of the projecting parts 4, which are provided on the light guide section 1a, is too large, an area where light is to be totally reflected is reduced, and therefore light use efficiency is deteriorated, instead of being improved.

It is therefore preferable to minimize a size of and the number of the projecting part(s) 4 which allows the space to be secured at least partially between the light guide section 1a and the reflection sheet 3, in order to provide the illumination device which achieves high light use efficiency.

Moreover, it is preferable that the projecting part 4 is provided in an edge part of the light guide section 1a.

According to the configuration, it is possible to provide an illumination device 31a which (i) has a reduced thickness, (ii) achieves high light use efficiency, and (iii) can carry out a local dimming.

Industrial Applicability

The present invention can be applied to (i) an illumination device which is used as a backlight, etc. of a liquid crystal display device, (ii) a surface illuminant device which includes the illumination device, and (iii) a liquid crystal display device which includes the surface illuminant device.

Reference Signs List

| | |
|---|---|
| 1: | Light guide |
| 1a: | Light guide section |
| 1b: | Light emitting section |
| 1c: | Emission surface |
| 1d: | Entrance surface |
| 2: | Point light source (LED light source) |
| 3: | Reflection sheet |
| 4: | Projecting part |
| 5: | Substrate |
| 6: | Optical member |
| 7: | Light emitting surface |
| 8: | Adhesive member |
| 21: | Liquid crystal display panel |
| 31, 31a: | Illumination device |
| 41: | Surface illuminant device |
| 51: | Liquid crystal display device |
| R1: | Area which is not irradiated with light |

**Claims**

1. An illumination device comprising:

a plurality of combinations each of which includes (i) a point light source and (ii) a light guide which causes light emitted from the point light source to diffuse and have a surface emission, the light guide having (i) a light emitting section which has an emission surface and (ii) a light guide section which guides the light, emitted from the point light guide, toward the light emitting section, a light emitting section of one of any adjacent two light guides being provided above a light guide section of the other of the any adjacent two light guides, a reflection sheet being provided so as to cover a surface of the light guide, the surface facing the emission surface, and at least one of the reflection sheet and the light guide section having a projecting part so that a space is secured at least partially between the light guide section and the reflection sheet.

2. The illumination device as set forth in claim 1, wherein:

the reflection sheet is a double-sided reflection sheet in at least an area which is secured between the light emitting section of the one of the any adjacent two light guides and the light guide section of the other of the any adjacent two light guides.

3. The illumination device as set forth in claim 1 or 2, wherein:

the projecting part has a smaller contact area where the projecting part and the light guide section are touching than a contact area where the projecting part and the reflection sheet are touching.

4. The illumination device as set forth in any one of claims 1 through 3, wherein:

the projecting part is made of a light-transmitting material.

5. The illumination device as set forth in any one of claims 1 through 4, wherein:

the projecting part is provided on the reflection sheet.

6. The illumination device as set forth in any one of claims 1 through 5, wherein:

the projecting part is provided so as to be located in an area, which is not irradiated with light emitted by the point light source, in the light guide section.

7. The illumination device as set forth in any one of claims 1 through 6, wherein:

the reflection sheet is combined with the light guide via an adhesive member.

8. A surface illuminant device comprising:

an illumination device recited in any one of claims 1 through 7; and an optical member provided on a light emitting surface of the illumination device.

9. A liquid crystal display device comprising, a surface illuminant device recited in claim 8, the surface illuminant device serving as a backlight.

F I G. 1

F I G. 2

F I G. 3

F I G. 4

F I G. 5

FIG. 6

(a)

(b)

(c)

FIG. 7

FIG. 8

F I G. 9

F I G. 1 0

(a)

201

202

202a    202b    202c

203    204    205

(b)

201

202c

202b

202

202a

203

F I G． 1 1

## INTERNATIONAL SEARCH REPORT

| | International application No. |
|---|---|
| | PCT/JP2009/066940 |

| A. CLASSIFICATION OF SUBJECT MATTER |
|---|
| *F21S2/00*(2006.01)i, *F21Y101/02*(2006.01)n |

According to International Patent Classification (IPC) or to both national classification and IPC

| B. FIELDS SEARCHED |
|---|
| Minimum documentation searched (classification system followed by classification symbols)<br>F21S2/00, F21Y101/02 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2006-286638 A (Avago Technologies General IP (Singapore) Pte. Ltd.),<br>19 October 2006 (19.10.2006),<br>entire text; all drawings<br>& US 2006/0221638 A1    & GB 2425392 A<br>& DE 102005056646 A     & KR 10-2006-0106774 A<br>& CN 1841152 A | 1-5,7-9<br>6 |
| Y<br>A | JP 2007-157457 A (Matsushita Electric Works, Ltd.),<br>21 June 2007 (21.06.2007),<br>entire text; all drawings<br>(Family: none) | 1-5,7-9<br>6 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 January, 2010 (04.01.10) | 12 January, 2010 (12.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

# EP 2 383 507 A1

| | INTERNATIONAL SEARCH REPORT | International application No. |
|---|---|---|
| | | PCT/JP2009/066940 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y<br>A | JP 2006-308690 A (Kabushiki Kaisha Esu Ke Ji),<br>09 November 2006 (09.11.2006),<br>entire text; all drawings<br>(Family: none) | 1-3,5,7-9<br>6 |
| A | JP 2004-253367 A (Sony Corp.),<br>09 September 2004 (09.09.2004),<br>entire text; all drawings<br>(Family: none) | 1-9 |
| A | JP 2007-115438 A (Alps Electric Co., Ltd.),<br>10 May 2007 (10.05.2007),<br>entire text; all drawings<br>& US 2007/0127266 A1 & CN 1952702 A | 1-9 |
| A | JP 2001-312916 A (Sony Corp.),<br>09 November 2001 (09.11.2001),<br>entire text; all drawings<br>& US 2001/0017774 A1 & TW 499575 B<br>& KR 10-2001-0085460 A | 1-9 |
| A | JP 2007-317653 A (Showa Denko Kabushiki<br>Kaisha),<br>06 December 2007 (06.12.2007),<br>entire text; all drawings<br>& EP 1952057 A & WO 2007/052842 A1<br>& KR 10-2008-0075141 A | 1-9 |

Form PCT/ISA/210 (continuation of second sheet) (April 2007)

23

**EP 2 383 507 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11288611 A